# DEMANDE DE BREVET EUROPEEN

(11) **EP 2 821 753 A1**
(43) Date de publication de la demande: **07.01.2015**
(21) Numéro de dépôt: 14175131.3
(22) Date de dépôt: 01.07.2014
(51) Int. Cl.: G01C 23/00, G09G 5/37

(54) **Procédé de gestion et de représentation d'un indicateur de taux de virage pour aéronef**

(30) Priorité: 05.07.2013 FR 1301597
(71) Demandeur: Thales, 92200 Neuilly Sur Seine (FR)
(72) Inventeur: Gaultier, Philippe, 33160 Saint Aubin de Médoc (FR)
(74) Mandataire: Bréda, Jean-Marc

(57) **Abrégé**

Le domaine général de l'invention est celui des procédés de représentation d'un indicateur de taux de virage d'aéronef mis en oeuvre par un système avionique embarqué. Le procédé comporte une étape de représentation graphique sur un dispositif de visualisation d'un symbole (20) appelé « maquette avion », ladite représentation graphique étant une fonction de la vitesse propre de l'aéronef et de son angle d'inclinaison. Dans un mode de réalisation privilégié, ladite maquette avion comporte deux branches (21) droites reliées entre elles par un point commun et inclinées sur l'horizontale de façon symétrique de façon à former un V inversé. L'angle d'inclinaison (α) des deux branches du V est proportionnel à la vitesse propre de l'aéronef, le coefficient de proportionnalité étant déterminé de façon que lorsque la vitesse propre et l'angle d'inclinaison correspondent à des valeurs compatibles du taux standard, ladite branche est parallèle à la barre d'horizon, indiquant ainsi que l'aéronef accomplit son virage au taux standard.

## Description

Le domaine de l'invention est celui de la présentation des informations nécessaires à un pilote d'aéronef pour accomplir un virage dans de bonnes conditions.

Dans certaines conditions, les virages accomplis sur aéronef le sont à une vitesse angulaire prédéterminée appelée taux standard de virage. Cette vitesse angulaire est exprimée en degrés/minute. Ainsi, un taux standard de 180°/mn signifie que l'aéronef accomplt un demi-tour en une minute. On applique ce taux standard lors de l'exécution de certaines manoeuvres, par exemple, dans le cadre de procédures de vol aux instruments dites « IFR », acronyme signifiant « Instrument Flight Rules » et en particulier dans le cadre de procédures « IMC », acronyme signifiant « Instrument Meteorological Conditions ». Ainsi, lorsqu'un aéronef est mis en attente sur une boucle appelée « hippodrome » et comportant deux parties semi-circulaires et deux parties droites, si la durée d'attente est par exemple de 5 minutes par hippodrome parcouru, chaque partie semi-circulaire est effectuée au taux standard de 180°/mn en une minute et chaque partie rectiligne est effectuée en une minute trente secondes.

Pour que la manoeuvre se passe correctement au taux standard, l'aéronef doit avoir une inclinaison encore appelée angle de roulis variable en fonction de la vitesse qui elle est imposée par la catégorie de l'aéronef et le type de procédure. De plus, si l'aéronef doit monter ou descendre pendant la manoeuvre, il est également nécessaire de lui imprimer un angle déterminé d'assiette.

Actuellement, ces informations sont affichées de façon dissociée sur les planches de bord. Sur les instruments de bord conventionnels électromécaniques, ces informations peuvent être affichées sur deux instruments différents. Sur les instruments de bord électroniques de type « EFIS », acronyme anglo-saxon signifiant « Electronic Flight Information System », ces informations sont représentées sur une représentation graphique appelée « ADI », acronyme signifiant « Attittude Director Indicator » qui donne au pilote les informations nécessaires au pilotage de son appareil.

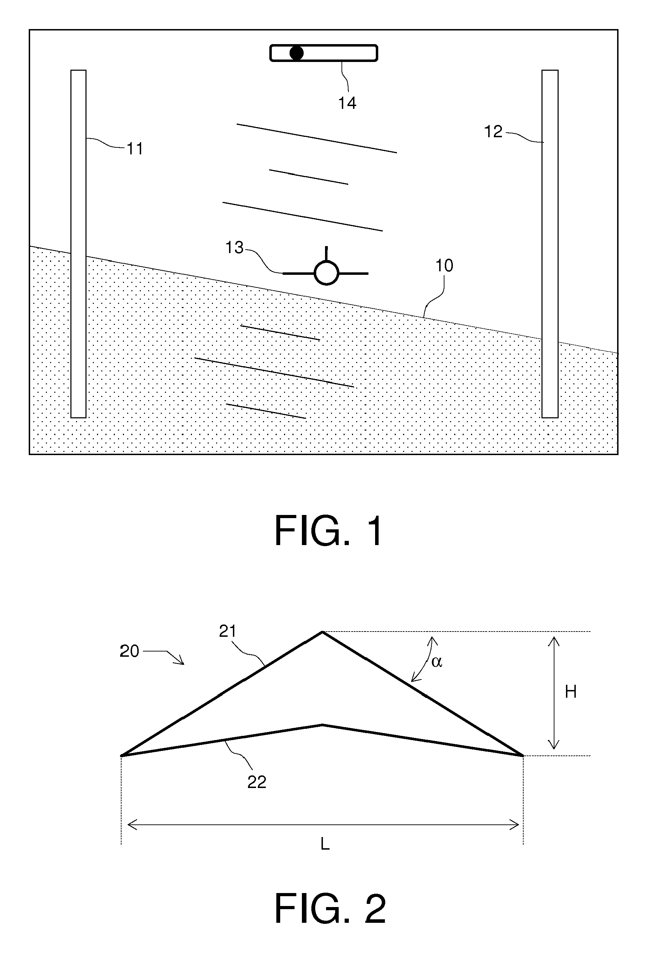

Une telle configuration simplifiée est représentée sur la figure 1. Elle comporte un horizon artificiel comportant une barre d'horizon 10, une première échelle 11 à gauche de la figure 1 représentative de la vitesse de l'appareil, une seconde échelle 12 à droite représentative de son altitude, un symbole central 13 appelé « maquette avion » représentative de l'assiette de l'appareil et un indicateur de taux de virage 14 situé en haut de la figure 1. Pendant un virage, l'attention du pilote est concentrée sur la position de la maquette avion sur l'ADI. En effet, un changement d'inclinaison se traduit par des modifications de portance et de traînée de l'appareil qui induisent des variations d'incidence. Il doit également surveiller le taux de virage de l'appareil. On comprend que la surveillance de deux indicateurs séparés et leur corrélation peut présenter une difficulté pour le pilote et diminuer ses temps de réaction.

L'indicateur de taux de virage selon l'invention ne présente pas ces inconvénients. Il regroupe sur un seul symbole les différentes informations nécessaires à la connaissance du taux de virage et surtout, il permet au pilote de déterminer très facilement si le taux de virage de son appareil est au taux standard ou non. Plus précisément, l'invention a pour objet un procédé de gestion et de représentation d'un indicateur de taux de virage d'aéronef mis en oeuvre par un système avionique embarqué sur un aéronef, ledit système avionique comportant :
- Des premiers moyens de mesure permettant de déterminer les angles d'inclinaison en roulis et en tangage de l'aéronef ;
- Des seconds moyens de mesure de la vitesse propre de l'aéronef ;
- Des moyens de calcul électroniques ;
   - Des moyens d'affichage comportant un dispositif de visualisation agencé de façon à afficher au moins une barre dite barre d'horizon dont l'inclinaison est représentative de l'angle d'inclinaison de l'aéronef et un symbole appelé « maquette avion » dont la position par rapport à la barre d'horizon est représentative de l'assiette de l'aéronef ;
   - Des moyens de stockage d'informations comportant au moins une première valeur prédéterminée d'une vitesse propre de l'aéronef et une seconde valeur prédéterminée d'un angle d'inclinaison associé à la première valeur, ces deux valeurs définissant le taux standard de virage permettant à l'aéronef d'accomplir un virage pendant une durée prédéterminée ;
      Caractérisé en ce que le procédé comporte une étape de calcul et de représentation graphique de la maquette avion agencée de façon que la représentation graphique de la maquette avion est fonction de la vitesse propre de l'aéronef et de son angle d'inclinaison.

Avantageusement, ladite maquette avion comporte au moins deux branches droites, de longueur égale, reliées entre elles par un point commun et inclinées sur l'horizontale de façon symétrique de façon à former un V inversé ;
- l'angle d'inclinaison d'une des deux branches du V est proportionnel à la vitesse propre de l'aéronef, le coefficient de proportionnalité étant déterminé de façon que lorsque la vitesse propre et l'angle de roulis correspondent à la première valeur et à la seconde valeur du taux standard, ladite branche est parallèle à la barre d'horizon, indiquant ainsi que l'aéronef accomplit son virage au taux standard.

Avantageusement, l'angle d'inclinaison des branches du V étant exprimé en degrés, la vitesse étant exprimée en noeuds, le coefficient de proportionnalité vaut sensiblement 0.15 degré/noeud.

Avantageusement, les moyens de stockage comportant au moins une troisième valeur prédéterminée définissant l'inclinaison maximale autorisée, le système avionique comportant des moyens d'alarme sonore, lorsque ladite inclinaison maximale est atteinte, le procédé comporte une étape d'alerte pendant laquelle les moyens d'alarme sonore sont activés et la maquette avion devient rouge.

Avantageusement, la forme générale de la maquette est un chevron symétrique comportant deux barres supérieures et deux barres inférieures, les deux barres supérieures étant les deux branches de ladite maquette.

L'invention sera mieux comprise et d'autres avantages apparaîtront à la lecture de la description qui va suivre donnée à titre non limitatif et grâce aux figures annexées parmi lesquelles :
La figure 1 déjà décrite représente une configuration de type ADI selon l'art antérieur ;
La figure 2 représente le symbole d'une maquette avion selon l'invention ;
Les figures 3 et 4 représentent une configuration ADI comportant une maquette avion selon l'invention.

Pour être mis en oeuvre, le procédé de représentation graphique d'un indicateur de taux de virage pour aéronef selon l'invention nécessite un système avionique embarqué. De tels systèmes existent aujourd'hui sur tous les aéronefs modernes. Ils doivent au moins comporter :
- des capteurs d'attitude de l'aéronef tels des gyroscopes, des accéléromètres ou une centrale inertielle ;
- Des calculateurs électroniques permettant de faire, entre autres, du traitement de données et des calculs de représentation graphique, fonction desdites données ;
- Des moyens d'affichage comportant au moins un dispositif de visualisation disposé sur la planche de bord de l'aéronef qui affiche une représentation graphique de type ADI comportant les symboles selon l'invention. Ces moyens d'affichage sont généralement des écrans matriciels couleur à cristaux liquides.

Il est possible d'envisager différentes représentations graphiques de la maquette avion agencées de façon que ces représentations graphiques soient fonction de la vitesse propre de l'aéronef et de son angle d'inclinaison. Cependant, la représentation en « chevron » est particulièrement avantageuse pace que, d'une part, sa forme est proche d'un aéronef stylisé et d'autre part, il est toujours possible d'aligner l'une des branches du chevron lorsque l'aéronef est au taux standard.

A titre d'exemple non limitatif, la figure 2 représente un symbole de maquette avion 20 selon l'invention en forme de chevron. La forme générale de la maquette est un chevron symétrique comportant deux branches supérieures 21 et deux branches inférieures 22. Les deux branches supérieures 21 sont droites, de longueur égale, reliées entre elles par un point commun et inclinées sur l'horizontale de façon symétrique de façon à former un V inversé. Le chevron est généralement de couleur claire si l'attitude de l'appareil ne présente pas de dangers immédiats. Il est à noter que la forme en V inversé des deux branches supérieures est fondamental, alors que les branches inférieures peuvent posséder d'autres formes géométriques.

L'angle d'inclinaison en valeur absolue des deux branches du V est proportionnel à la vitesse propre V_{P} de l'aéronef. Le coefficient de proportionnalité K est tel, que lorsque la vitesse propre et l'angle de roulis correspondent au taux standard, une des branches du V est parallèle à la barre d'horizon de l'ADI, indiquant ainsi que l'aéronef accomplit son virage au taux standard.

Si on note α cet angle d'inclinaison, si H est la hauteur du chevron et L sa largeur comme indiqué sur la figure 2, on a les relations :
tgα = 2H/L et
α = K.V_{P}

Pour des applications en aviation civile, l'angle d'inclinaison des branches du V étant exprimé en degrés, la vitesse étant exprimée en noeuds, le coefficient de proportionnalité vaut sensiblement 0.15 degré/noeud. L'inclinaison est donc de 15 degrés pour une vitesse propre de 100 noeuds et de 20 degrés à une vitesse de 140 noeuds.

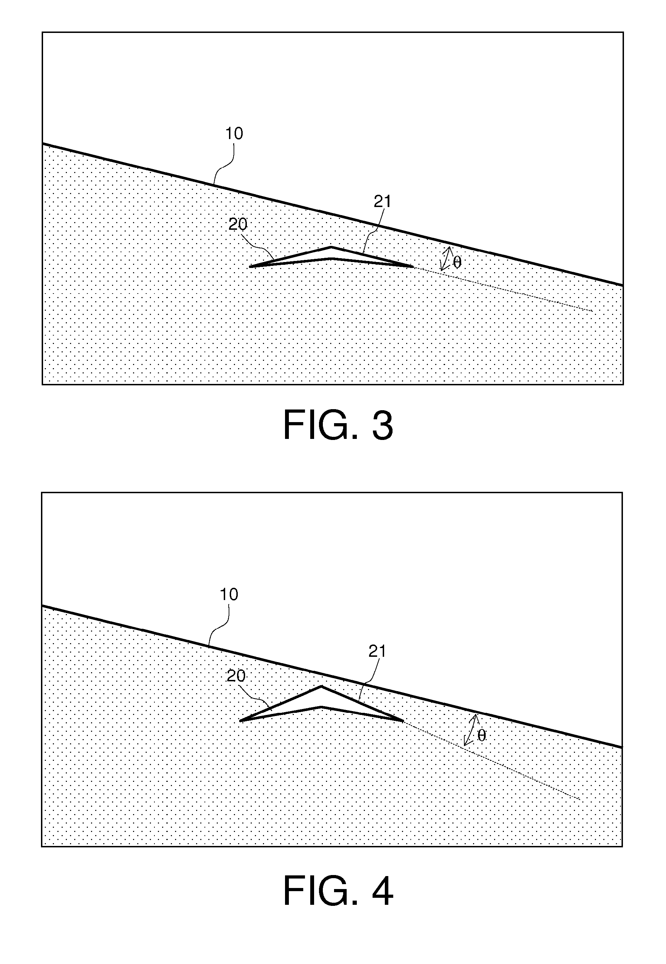

Les figures 3 et 4 représentent un ADI comportant une telle maquette avion. Sur ces figures 3 et 4, on a uniquement représenté la barre d'horizon 10 et la maquette avion 20 selon l'invention. Dans les deux cas, l'aéronef est en train d'accomplir un virage et il est en descente, la maquette étant sous la barre d'horizon.

Sur la figure 3, la vitesse propre de l'aéronef correspond à celle du taux standard, l'angle θ entre la barre supérieure 20 du chevron et la barre d'horizon 10 est nul. Sur la figure 4, la vitesse propre de l'aéronef est supérieure à celle du taux standard, l'angle θ entre la barre supérieure 20 du chevron et la barre d'horizon 10 n'est plus nul. Dans ce cas, le pilote règle l'inclinaison de son appareil pour retrouver les conditions du taux standard de virage.

La représentation de la maquette avion en chevron selon l'invention a deux avantages essentiels. Le premier est que l'oeil humain étant très sensible aux défauts de parallélisme, le pilote se rend compte très rapidement en regardant simplement son ADI que l'inclinaison de son appareil correspond ou non à celle du taux standard. De plus, lorsque cette inclinaison n'est pas la bonne, la valeur de l'angle θ entre la barre supérieure 20 du chevron et la barre d'horizon 10 lui donne une indication précise de la manoeuvre à effectuer. Ainsi, dans le cas de la figure 4, le pilote doit « serrer » davantage le virage en cours.

La représentation de la maquette selon l'invention peut servir également à d'autres fins. Ainsi, si l'appareil atteint ou dépasse l'inclinaison maximale autorisée, le système avionique comporte des moyens d'alarme sonore agencés de façon que, lorsque l'inclinaison maximale autorisée est atteinte, le procédé de gestion et de représentation de la maquette comporte une étape d'alerte pendant laquelle les moyens d'alarme sonore sont activés et la maquette avion devient rouge. Si le dépassement est involontaire, le pilote réduit alors l'inclinaison de son appareil jusqu'à retrouver un taux normal. Si le dépassement est volontaire, il poursuit sa manoeuvre jusqu'à ce qu'une nouvelle consigne apparaisse.

Ce type de symbologie peut également être utilisé pour le pilotage automatique. Le pilote assure alors une mission de surveillance de la manière dont s'effectue le virage de son appareil, n'intervenant que si besoin est.

## Revendications

1. Procédé de gestion et de représentation d'un indicateur de taux de virage d'aéronef mis en oeuvre par un système avionique embarqué sur un aéronef, ledit système avionique comportant :
- Des premiers moyens de mesure permettant de déterminer les angles d'inclinaison en roulis et en tangage de l'aéronef ;
- Des seconds moyens de mesure de la vitesse propre de l'aéronef ;
- Des moyens de calcul électroniques ;
- Des moyens d'affichage comportant un dispositif de visualisation agencé de façon à afficher au moins une barre (10) dite barre d'horizon dont l'inclinaison est représentative de l'angle d'inclinaison de l'aéronef et un symbole (20) appelé « maquette avion » dont la position par rapport à la barre d'horizon est représentative de l'assiette de l'aéronef ;
- Des moyens de stockage d'informations comportant au moins une première valeur prédéterminée d'une vitesse propre de l'aéronef et une seconde valeur prédéterminée d'un angle d'inclinaison associé à la première valeur, ces deux valeurs définissant le taux standard de virage permettant à l'aéronef d'accomplir un virage pendant une durée prédéterminée ;
**Caractérisé en ce que** le procédé comporte une étape de calcul et de représentation graphique de la maquette avion agencée de façon que la représentation graphique de la maquette avion est fonction de la vitesse propre de l'aéronef et de son angle d'inclinaison.

2. Procédé de gestion et de représentation selon la revendication 1, **caractérisé en ce que** :
- la maquette avion comporte au moins deux branches (21) droites, de longueur égale, reliées entre elles par un point commun et inclinées sur l'horizontale de façon symétrique de façon à former un V inversé ;
- l'angle d'inclinaison (α) d'une des deux branches du V soit proportionnel à la vitesse propre de l'aéronef, le coefficient de proportionnalité étant déterminé de façon que lorsque la vitesse propre et l'angle de roulis correspondent à la première valeur et à la seconde valeur du taux standard, ladite branche est parallèle à la barre d'horizon, indiquant ainsi que l'aéronef accomplit son virage au taux standard.

3. Procédé de gestion et de représentation selon la revendication 2, **caractérisé en ce que**, l'angle d'inclinaison des branches du V étant exprimé en degrés, la vitesse étant exprimé en noeuds, le coefficient de proportionnalité vaut sensiblement 0.15 degré/noeud.

4. Procédé de gestion et de représentation selon la revendication 2, **caractérisé en ce que**, les moyens de stockage comportant au moins une troisième valeur prédéterminée définissant l'inclinaison maximale autorisée, le système avionique comportant des moyens d'alarme sonore, lorsque ladite inclinaison maximale est atteinte, le procédé comporte une étape d'alerte pendant laquelle les moyens d'alarme sonore sont activés et la maquette avion devient rouge.

5. Procédé de gestion et de représentation selon l'une des revendications précédentes, **caractérisé en ce que** la forme générale de la maquette est un chevron symétrique comportant deux barres (21) supérieures et deux barres (22) inférieures, les deux barres supérieures étant les deux branches de ladite maquette.
